# EUROPEAN PATENT APPLICATION

(11) **EP 2 650 728 A1**
(43) Date of publication of application: **16.10.2013**
(21) Application number: 10860551.0
(22) Date of filing: 08.12.2010
(51) Int. Cl.: G03B 21/14, F21S 2/00, G02F 1/13357, G03B 21/00, F21Y 101/02

(54) **LIGHTING OPTICAL SYSTEM AND PROJECTION DISPLAY DEVICE COMPRISING SAME**

(71) Applicant: Nec Display Solutions, Ltd, Tokyo 108-0073 (JP)
(72) Inventor: SAITOU, Hiroyuki, Tokyo 108-0073 (JP)
(74) Representative: Betten & Resch
(86) International application number: PCT/JP2010/071992
(87) International publication number: WO 2012/077192

(57) **Abstract**

Provided is a lighting optical system capable of increasing brightness without increasing etendue or device size. The lighting optical system includes first light source 10 for emitting first and second color lights R and G, and second light source 20 for emitting third color light B. First light source 10 includes semiconductor laser element 11a that emits a linearly polarized laser beam, excitation light generation means 18 for spatially and temporally separating the laser beam from semiconductor laser element 11a to generate first and second excitation lights E1 and E2, first phosphor 12 that emits first color light R by first excitation light E1, and second phosphor 13 that emits second color light G by second excitation light E2. Excitation light generation means 18 includes liquid crystal element 14 that converts the incident laser beam into two lights orthogonal to each other in polarization direction, and light space separation means 15 for spatially separating the two lights into first and second excitation lights E1 and E2 according to the difference Between the two lights in polarization direction.

## Description

### Technical Field

The present invention relates to a lighting optical system and a projection display device including the same.

### Background Art

Recently, in the projection display device (i.e., projector) that uses a liquid crystal panel or a digital micromirror device (DMD) as a display element, technology that uses a light-emitting diode (LED) as the light source has been a focus of attention (e.g., see Patent Literature 1).

The projector using the LED as the light source (i.e., LED projector) has an advantage of a long life and high reliability which is due to the long life/high reliability of the LED.

### Citation List

### Patent Literature

Patent Literature 1: JP 2003-186110 A

### Summary of Invention

### Technical Problem

However, as described below, the LED projector has a problem that it is difficult to achieve a high-luminance image display due to limitations of etendue.

In the lighting optical system that projects light to the display element, the limitations of etendue determined by the light-emitting area and the radiation angle of the light source must be taken into consideration. In other words, to effectively use light from the light source as projected light, the product value of the light-emitting area and the radiation angle of the light source must be set equal to or lower than that of the area of the display element and the capturing angle determined by the F-number of the lighting optical system. In the LED, however, the amount of light is smaller than that of the other light sources. Therefore, even if the amount of light can be increased by increasing the size of the light-emitting area, this leads to the increase of etendue. Consequently, since light use efficiency is lowered, it becomes impossible to achieve the high-luminance image display.

Thus, there is a demand for increasing the amount of light without increasing the size of the light-emitting area in the light source of the projector. However, it is difficult to achieve this only by using the LED.

From the standpoint of increasing the amount of light, a light source other than the LED may be used for each color light. However, this is not desirable because it will increase the number of components, thus increasing the size of the entire projector.

It is therefore an object of the present invention to provide a lighting optical system capable of increasing brightness without increasing etendue or device size. It is another object of the invention to provide a projection display device that includes the lighting optical system.

### Solution to Problem

To achieve the above object, a lighting optical system according to the present invention includes a first light source for emitting first color light and second color light, and a second light source for emitting third color light. The first light source includes a semiconductor laser element that emits a linearly polarized laser beam, excitation light generation means for spatially and temporally separating the laser beam emitted from the semiconductor laser element to generate first excitation light and second excitation light, a first phosphor that is excited by the first excitation light to emit first color light, and a second phosphor that is excited by the second excitation light to emit second color light. The excitation light generation means includes a liquid crystal element that converts the incident laser beam into one of two lights orthogonal to each other in polarization direction, and light space separation means for spatially separating the two lights converted by the liquid crystal element into the first excitation light and the second excitation light according to a difference between the two lights in polarization direction.

A projection display device according to the present invention includes: the lighting optical system described above; an optical modulation device that modulates light that is output from the lighting optical system according to an image signal; and a projection optical system that projects the light modulated by the optical modulation device.

### Advantageous Effects of Invention

Thus, the present invention can provide a lighting optical system capable of increasing brightness without increasing etendue or device size, and a projection display device that includes the same.

### Brief Description of Drawings

Fig. 1 shows a schematic diagram showing the configuration of a liquid crystal projector that includes a lighting optical system according to a first embodiment of the present invention;
Fig. 2 shows characteristics of wavelength-transmittance of a dichroic prism of the liquid crystal projector shown in Fig. 1;
Fig. 3 shows a schematic diagram showing the configuration of a DMD projector that includes a lighting optical system according to a second embodiment of the present invention.
Fig. 4 shows a schematic front view showing the configuration of a DMD in the DMD projector shown in Fig. 3; and
Fig. 5 shows a schematic sectional view showing the inclined state of a micromirror in the DMD shown in Fig. 4.

### Description of Embodiments

Hereinafter, embodiments of the present invention will be described with reference to the drawings.

### (First Embodiment)

First, a lighting optical system of a projection display device that uses a liquid crystal panel as a display element (i.e., liquid crystal projector) according to a first embodiment of the present invention will be described.

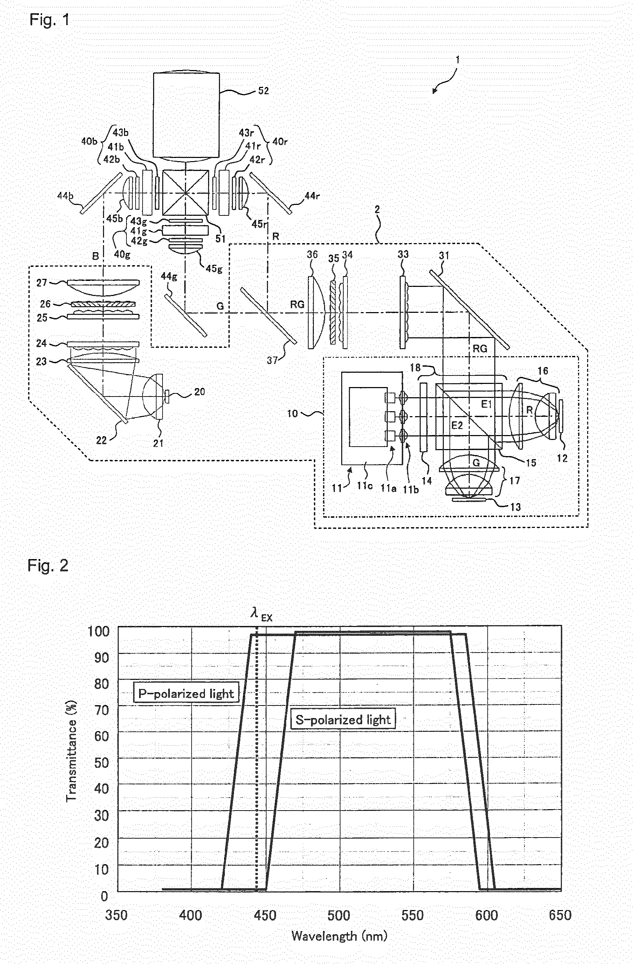

Fig. 1 shows a schematic diagram showing the configuration of an optical system of the liquid crystal projector according to this embodiment.

Liquid crystal projector 1 includes lighting optical system 2 that includes a first light source for emitting first color light and second color light, and a second light source for emitting third color light. Hereinafter, an example where the first color light and the second color light are respectively red light and green light and the third color light is blue light will be described. However, the present invention is not limited to this example. For example, the first color light can be green light, and the second color light can be red light, or the third color light can be red or green light. As described above, while the major feature of the present invention is the configuration of the first light source for emitting two color lights, an arbitrary light source can be used for the second light source. Thus, the combination of the two color lights in the first light source can be selected by taking the configuration of the second light source into consideration.

First light source 10 includes laser light source unit (laser light source part) 11 that emits a linearly polarized laser beam, red phosphor (first phosphor) 12 that emits red light (first color light) R, and green phosphor (second phosphor) 13 that emits green light (second color light) G. Specifically, in this embodiment, red phosphor 12 and green phosphor 13 are excited by laser beams to emit red light R and green light G. Further, first light source 10 includes excitation light generation means 18 for spatially and temporally separating the laser beam emitted from laser light source unit 11 to generate first excitation light E1 and second excitation light E2. First excitation light E1 is used for exciting the red phosphor, and second excitation light E2 is used for exciting the green phosphor. In this embodiment, excitation light generation means 18 enables use of the common laser light source (laser light source unit 11) without using any different laser light sources respectively for two independently arranged phosphors 12 and 13. Thus, an increase in the number of components and an accompanying increase in the size of the device can be prevented.

Laser light source unit 11 includes a plurality of blue laser diodes 11a as semiconductor laser elements for emitting laser beams. In other words, in this embodiment, blue laser beams are used as excitation light for exciting red phosphor 12 and green phosphor 13. Laser light source unit 11 further includes collimator lens 11b for converting the laser beams emitted from blue laser diodes 11a into collimated light beams, mechanism component 11c for holding blue laser diodes 11a and collimator lenses 11b, and a cooling unit (not shown) for cooling blue laser diodes 11a. In this embodiment, each blue laser diode 11a is disposed in laser light source unit 11 so that the polarization direction of the laser beam can be parallel to the paper surface shown in Fig. 1.

Excitation light generation means 18 includes liquid crystal element 14 that temporally separates the laser beam from laser light source unit 11, and dichroic prism 15 for spatially separating the two lights temporally separated by liquid crystal element 14.

Liquid crystal element 14 functions to change the polarization direction of the incident laser beam according to an applied voltage. In other words, liquid crystal element 14 can change the polarization direction of the laser beam that is transmitted through liquid crystal element 14 by switching between a state in which voltage is not applied (i.e., OFF state) and a state in which voltage is applied (i.e., ON state). Specifically, liquid crystal element 14 can directly transmit the laser beam in the OFF state, while liquid crystal element 14 can rotate the polarization direction of the laser beam by 90° to transmit it in the ON state. The OFF state and the ON state can be switched in time division. Accordingly, liquid crystal element 14 can time-divisionally output the two lights orthogonal to each other in a polarization direction.

Dichroic prism 15 is disposed on the output side of liquid crystal element 14. Dichroic prism 15 is configured to spatially separate the two lights (linearly polarized lights) that are output from liquid crystal element 14 and are orthogonal to each other in a polarization direction into first excitation light E1 and second excitation light E2 according to the difference between the two lights in polarization direction. Specifically, dichroic prism 15 has a polarized light separation mechanism of transmitting linearly polarized light that enters dichroic prism 15 as P-polarized light and of reflecting linearly polarized light that enters dichroic prism 15 as S-polarized light. Accordingly, when liquid crystal element 14 is in the OFF state, dichroic prism 15 can directly transmit the laser beam transmitted through liquid crystal element 14 to output it as first excitation light E1 On the other hand, when liquid crystal element 14 is in the ON state, dichroic prism 15 can reflect the laser beam whose polarization direction has been changed by liquid crystal element 14 to output it as second excitation light E2.

Further, dichroic prism 15 is configured to reflect red light R emitted from red phosphor 12 and to transmit green light G emitted from green phosphor 13. Dichroic prism 15 of this embodiment accordingly has a function of combining red light R and green light G in addition to the polarized light separation function. Thus, the device can be further miniaturized.

Liquid crystal element 14 is desirably configured to change the time ratio of the ON state to the OFF state per unit time. Accordingly, by changing the generation ratio of first excitation light E1 to second excitation light E2 from dichroic prism 15, the ratio of the amount of red light R to the amount of green light G per unit time can be adjusted. Further, the laser output of the laser light source unit can also be desirably adjusted to synchronize with the time ratio. With this configuration, the time ratio of the ON state to the OFF state of active diffraction element 14 can be adjusted according to an image signal to be displayed, and the laser output can be adjusted to synchronize with the time ratio. As a result, contrast can be improved and power consumption can be reduced.

In this description, the P-polarized light that is transmitted through dichroic prism 15 is defined as first excitation light E1, and the S-polarized light that is reflected by dichroic prism 15 is defined as second excitation light E2. Needless to say, however, the reverse can be defined.

Referring to Fig. 2, the principle of transmitting the P-polarized light and reflecting the S-polarized light by dichroic prism 15 will be described.

Fig. 2 shows characteristics of wavelength-transmittance of dichroic prism 15. Fig. 2 shows the transmittance characteristic curves of dichroic prism 15 for the P-polarized light and the S-polarized light.

As can be understood from Fig. 2, the transmittance characteristic curve of dichroic prism 15 for the P-polarized light has a tendency of widening to the shorter wavelength side and the longer wavelength side with respect to the S-polarized light. This enables, even when the P-polarized light and the S-polarized of equal wavelengths enter dichroic prism 15, transmission of one polarized light while reflecting the other polarized light. Thus, by selecting the wavelength of the laser beam emitted from laser light source 11 to, for example, λ_{EX}, dichroic prism 15 can transmit the P-polarized light and reflect the S-polarized light.

As shown in Fig. 1, condenser lens groups 16 and 17 are respectively arranged on the front sides of red phosphor 12 and green phosphor 13.

In this embodiment, red light R and green light G are emitted from light source 10 on the same optical path. However, lights must enter liquid crystal units 40r, 40g, and 40b described below through different optical paths. Accordingly, lighting optical system 2 includes, on the optical path of color light RG emitted from first light source 10, first dichroic mirror 37 that is disposed to reflect red light R and to transmit green light G. Between first dichroic mirror 37 and first light source unit 10, lens arrays 33 and 34 that make the illumination distribution of the incident light uniform and PS converter (polarization conversion element) 35 that aligns the polarization direction of light with a predetermined direction are arranged via reflection mirror 15 and condenser lens 36. In this embodiment, PS converter 35 is designed so that the light that is output from PS converter 35 can be converted into S-polarized light for first dichroic mirror 37.

As described above, the laser beam and the phosphors are used for generating red light R and green light G. On the other hand, the LED that is a semiconductor light-emitting element is used for generating blue light B. In other words, liquid crystal projector 1 includes blue LED 20 as a second light source.

As in the case of first light source 10, several optical elements are arranged on the optical path of blue light B emitted from blue LED 20. On the light-emitting side of blue LED 20, two condenser lenses 21 and 23 are arranged via reflection mirror 22 to condense blue light B emitted from blue LED 20. Lens arrays 24 and 25, PS converter (polarization conversion element) 26, and condenser lens 27 are similarly arranged.

Liquid crystal projector 1 according to this embodiment includes liquid crystal units (optical modulation devices) 40r, 40g, and 40b that modulate color lights R, G, and B output from lighting optical system 2 according to an image signal. Liquid crystal units 40r, 40g, and 40b respectively include liquid crystal panels 41r, 41g, and 41b for modulating color lights R, G, and B, incident-side polarization plates 42r, 42g, and 42r arranged on the incident sides of liquid crystal panels 41r, 41g, and 41b, and output-side polarization plates 43 r, 43 g, and 43r arranged on the output sides of liquid crystal panels 41 r, 41 g, and 41b.

Between lighting optical system 10 and liquid crystal units 40r, 40g, and 40b, reflection mirrors 44r, 44g, and 44 for changing the optical paths of color lights R, G, and B, and condenser lenses 45r, 45g, and 45b for adjusting incident angles to liquid crystal units 40r, 40g, and 40b are arranged. PS converter 26 is designed so that the S-polarized light can enter reflection mirrors 44r, 44g, and 44b.

Further, liquid crystal projector 1 includes cross dichroic prism (light-combining optical system) 51 for combining color lights R, G, and B modulated by liquid crystal units 40r, 40g, and 40b to output combined light, and projection lens (projection optical system) 52 for projecting and displaying the combined light on a screen or the like.

Next, referring again to Fig. 1, the operation of projecting an image in liquid crystal projector 1 of this embodiment will be described.

The laser beam emitted from laser light source 11 enters liquid crystal element 14. The linearly polarized laser beam is temporally separated into light that is directly transmitted through liquid crystal element 14 and light that is transmitted through liquid crystal element 14, and whose polarization direction is changed. The two linearly polarized lights that are transmitted through liquid crystal element 14 enter dichroic prism 15.

The linearly polarized light that enters dichroic prism 15 as P-polarized light is transmitted through dichroic prism 15 to be output as first excitation light E1. Then, first excitation light E1 is condensed by condenser lens group 16 to enter red phosphor 12 disposed on the optical axis of laser light source unit 11. Red phosphor 12 is excited by first excitation light E1 to emit randomly polarized red light R. Condenser lens group 16 concentrates red light R that is emitted from red phosphor 12 so that it will enter dichroic prism 15.

On the other hand, the linearly polarized light that enter dichroic prism 15 as S-polarized light is reflected by dichroic prism 15 to be output as second excitation light E2. Then, second excitation light E2 is condensed by condenser lens group 17 to enter green phosphor 13. Green phosphor 13 is excited by second excitation light E2 to emit randomly polarized green light G. Condenser lens group 17 concentrates green light G that is emitted from green phosphor 13 so that it will enter dichroic prism 15.

Red light R is reflected by dichroic prism 15 while green light G is transmitted through dichroic prism 15. Accordingly, red light R and green light G are combined by dichroic prism 15. Combined color light RG is reflected by reflection mirror 31. Then, lens arrays 33 and 34 make the irradiation distribution of combined color light RG uniform, and PS converter converts color light RG to be S-polarized light for first dichroic mirror 37. Thus, color light RG, whose illumination distribution has been made uniform and whose polarization direction has been aligned, is condensed by condenser lens 36 to enter first dichroic mirror 37.

Color light RG, which has entered first dichroic mirror 37, is separated into red light R and green light G. These lights are respectively transmitted to liquid crystal units 40r and 40g via reflection mirrors 44r and 44g and condenser lenses 45r and 45g.

Blue light B emitted from blue LED 20 enters lens arrays 24 and 25 via condenser lenses 21 and 23 and reflection mirror 22. Lens arrays 24 and 25 make the illumination distribution of blue light B uniform, and PS converter 26 converts blue light B to be S-polarized light for reflection mirror 44b. Then, blue light B enters condenser lens 27. Blue light B condensed by condenser lens 27 is transmitted to liquid crystal unit 40b via reflection mirror 44b and condenser lens 45b.

Color lights R, G, and B are modulated by liquid crystal units 40r, 40g, and 40b according to the image signal. Modulated color lights R, G, and B are output to cross dichroic prism 51, and combined by cross dichroic prism 51. The combined light enters projection lens 52, and is projected to the screen or the like by projection lens 52 to be displayed as an image.

As mentioned above, the lighting optical system according to this embodiment uses the combination of the semiconductor laser element and the phosphors as the light sources of the red light and the green light. In contrast to a case in which the LED is used as a light source, this enables an increase in the amount of light without causing the size of the light-emitting area to increase. Thus, by preventing an increase of etendue, light use efficiency can be increased, and brightness of the lighting optical system can be improved. Therefore, according to the embodiment, by using the excitation light generation means that includes the liquid crystal element and the dichroic prism and is capable of spatially and temporally separating the laser beam, the common laser light source can be used for the two independently arranged phosphors. As a result, the above-mentioned improvement of brightness can also be achieved without causing an increase in the number of components and an accompanying increase in the size of the device.

In this embodiment, the LED is used as the second light source for emitting the third color light. However, as described above, the light source is not limited to an LED, accordingly, a light source other than the LED can be used. For example, the second light source can be configured to emit blue light by exciting the phosphor with the laser beam as in the case of the first light source.

### (Second Embodiment)

Next, the lighting optical system of a projection display device that uses a digital micromirror device (DMD) as a display element (i.e., DMD projector) according to a second embodiment of the present invention will be described.

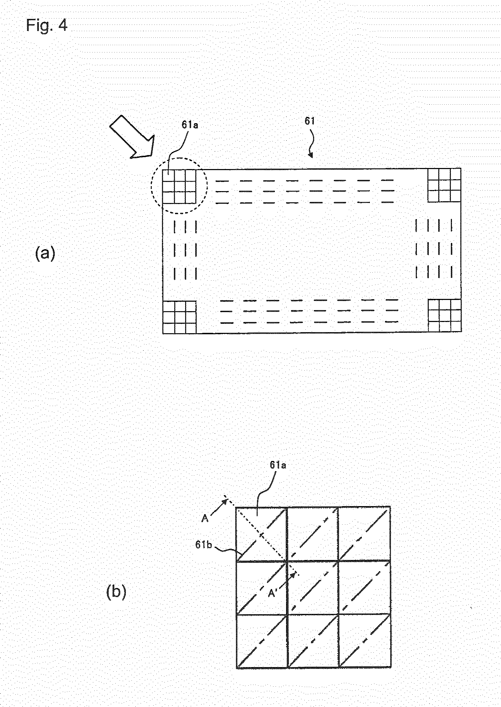

Fig. 4 shows a schematic diagram showing the configuration of an optical system of the DMD projector according to this embodiment.

This embodiment is a modification of the first embodiment where the configuration of the display element (optical modulation device) is changed. In the embodiment, a DMD is used in place of the liquid crystal unit of the first embodiment. The arrangement configuration of the optical system of this embodiment is accordingly changed from that of the first embodiment. However, the configuration of each of light sources 10 and 20 is similar to that of the first embodiment. Hereinafter, members similar to those of the first embodiment will be denoted by similar reference numerals shown, and description thereof will be omitted.

In lighting optical system 4 according to this embodiment, in contrast to that of the first embodiment, second dichroic mirror 38 for transmitting red light R and green light G and reflecting blue light B is added. Second dichroic mirror 38 is disposed between first light source 10 and reflection mirror 31. Blue LED 20 is arranged so as to cause blue light B to enter second dichroic mirror 38 via condenser lens group 29. This enables second dichroic mirror 38 to output combined light RGB including three color lights R, G, and B. In this embodiment, first dichroic mirror 37 in the first embodiment is not provided, and optical elements other than the condenser lenses associated with second light source (blue LED) 20 in the first embodiment are not provided. Since output light need not be converted into light of a specific polarization component, the polarization conversion element (PS converter 35) of the first embodiment is also not provided.

In DMD projector 3 according to this embodiment, as described below, a color image is projected by using a single plate method. Accordingly, lighting optical system 4 must output red light R, green light G, and blue light B not only, as combined light RGB on the same optical path, but also in time division. Thus, in this embodiment, laser light source unit 11 and blue LED 20 are configured to be time-divisionally switched on and off according to the time ratio of the OFF state to the ON state of liquid crystal element 14. Table 1 shows an example of time-division operation patterns for the respective color components of the color image.

**[Table 1]**

| | Color component | | |
|---|---|---|---|
| | Green | Red | Blue |
| Liquid crystal element 14 | ON | OFF | |
| Laser light source unit 11 | ON | | OFF |
| Blue LED 20 | OFF | | ON |

Further, DMD projector 3 according to this embodiment includes DMD 61 that is a display element, and total reflection (TIR) prism 62 disposed on the front side of DMD 61, i.e., between DMD 61 and projection lens 52. Between lighting optical system 4 and total internal reflection (TIR) prism 62, reflection mirror 63 for changing the optical path of combined light RGB and condenser lens 64 are arranged.

Now, the configuration of DMD 61 used in DMD projector 3 according to this embodiment will be described.

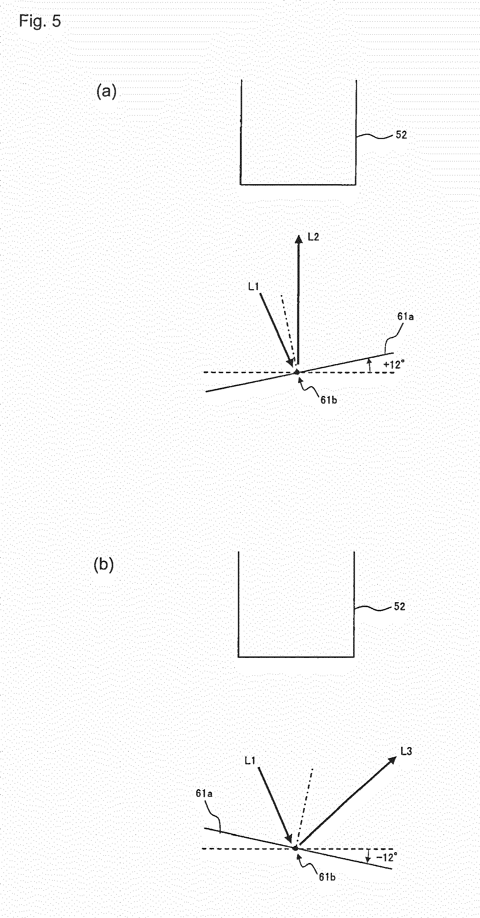

Fig. 4(a) shows a schematic front view showing the configuration of DMD 61, and Fig. 5(b) is an enlarged schematic front view showing the vicinity of a region surrounded with dotted lines shown in Fig. 4(a).

DMD 61 includes many micromirrors (pixels) 61a arrayed in a matrix, and is disposed in DMD projector 3 so that light can enter from the arrow direction shown in Fig. 4(a). Each micromirror 61a is configured to incline by ±12° with axis 61a orthogonal to incident light set as the rotational axis. Rotational axis 61a of micromirror 61a is the diagonal direction of each micromirror 61 whose shape is square, and inclines by 45° with respect to the arraying direction of micromirrors 61a.

Fig. 5 shows a schematic sectional view taken along line A-A' shown in Fig. 4(b). Fig.5(a) and 5(b) show micromirrors 61a respectively inclined by +12° and -12°. In Figs 5(a) and 5(b), the arrangement of projection lens 52 with respect to micromirror 61a is also schematically shown.

Micromirror 61a is set in the ON state when it inclines by +12°, Specifically, as shown in Fig. 5(a), in the ON state, light that enters micromirror 61 (see arrow L1) is reflected in a direction (refer to arrow L2) that allows it to enter projection lens 52. On the other hand, micromirror 61a is set in the OFF state when it inclines by -12°. Specifically, as shown in Fig. 5(b), light that enters micromirror 61a (see arrow L1) is reflected in a direction (see arrow L3) that prevents it from entering projection lens 52.

Thus, DMD 61 can project the color image through projection lens 52 by switching between the ON state and the OFF state of each micromirror 61 a in synchronization with color lights R, G, and B entered in time division.

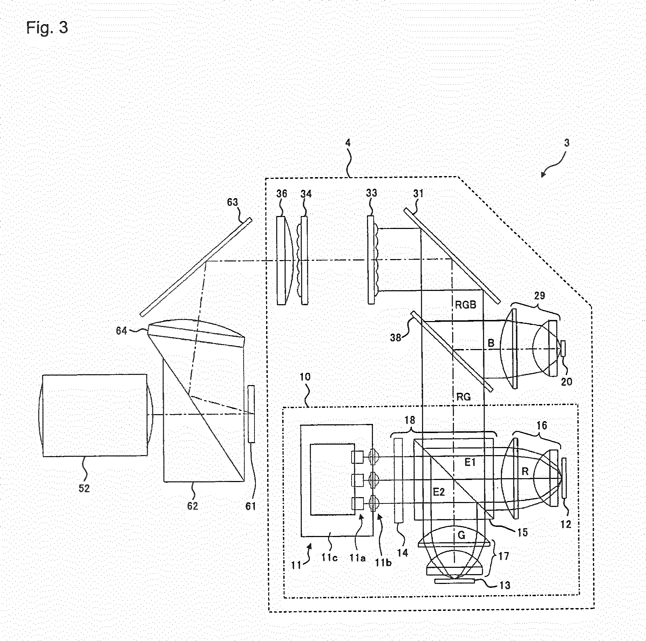

Lastly, referring again to Fig. 3, the operation of projecting an image by DMD projector 3 of this embodiment will be described.

Red light R and green light G are, as in the case of the first embodiment, emitted from first light source 10 on the same optical path to enter second dichroic mirror 38. Blue light B emitted from blue LED 20 also enters second dichroic mirror 38 via condenser lens group 29.

Red light R and green light G are transmitted through second dichroic mirror 38 while blue light B is reflected by second dichroic mirror 38: Accordingly, three color lights are combined by second dichroic mirror 38. Combined color light RGB is reflected by reflection mirror 31. Lens arrays 33 and 34 make the illumination distribution of combined color light RGB uniform. Then, combined light RGB is condensed by condense lens 36 so that it exits from lighting optical system 4.

Color light RGB output from lighting optical system 4 enters TIR prism 62 via reflection mirror 63 and condenser lens 64. Color light RGB that enters TIR prism 62 is reflected on an air gap surface in TIR prism 62 so that it enters DMD 61, and is modulated by DMD 61 according to an image signal. The modulated light is transmitted through TIR prism 62 so that it enters projection lens 52, and is projected to the screen or the like by projection lens 52 to be displayed as an image.

### Reference Signs List

1 Liquid crystal projector
2, 4 Lighting optical system
3 DMD projector
10 First light source
11 Laser light source unit
11a Blue laser diode
11b Collimator lens
11c Mechanism component
12 Red phosphor
13 Green phosphor
14 Liquid crystal element
15 Dichroic prism
16, 17, 29 Condenser lens group
18 Excitation light generation means
20 Blue LED
21, 23, 27, 36, 45r, 45g, 45b, 64 Condenser lens
22, 31, 44r, 44g, 44b, 63 Reflection mirror
24, 25, 33, 34 Lens array
26, 35 PS converter
37 First dichroic mirror
38 Second dichroic mirror
40r, 40g, 40b Liquid crystal unit
41r, 41g, 41b Liquid crystal panel
42r, 42g, 42b Incident-side polarization plate
40r, 40g, 40b Output-side polarization plate
51 Cross dichroic prism
52 Projection lens
61 DMD
62 TIR prism

## Claims

1. A lighting optical system comprising:
a first light source for emitting first color light and second color light; and
a second light source for emitting third color light,
wherein the first light source includes:
a semiconductor laser element that emits a linearly polarized laser beam;
excitation light generation means for spatially and temporally separating the laser beam emitted from the semiconductor laser element to generate first excitation light and second excitation light; and
a first phosphor that is excited by the first excitation light to emit first color light; and
a second phosphor that is excited by the second excitation light to emit second color light,
wherein the excitation light generation means includes:
a liquid crystal element that converts the incident laser beam into two lights orthogonal to each other in polarization direction; and
light space separation means for spatially separating the two lights converted by the liquid crystal element into the first excitation light and the second excitation light according to a difference between the two lights in polarization direction.

2. The lighting optical system according to claim 1, wherein the liquid crystal element changes the polarization direction of the laser beam according to an applied voltage.

3. The lighting optical system according to claim 2, wherein the liquid crystal element directly transmits the laser beam in a state in which the voltage is not applied, and rotates the polarization direction of the laser beam by 90° to transmit the laser beam in a state in which the voltage is applied.

4. The lighting optical system according to any one of claims 1 to 3, wherein the light space separation means has a function of combining the first color light emitted from the first phosphor and the second color light emitted from the second phosphor.

5. The lighting optical system according to claim 4, wherein light space separation means includes a dichroic prism having a polarized light separation mechanism of transmitting one light, from among the two lights orthogonal to each other in polarization direction, and reflecting the other light, and the dichroic prism transmits the first or second color light and reflects the remaining first or second color light.

6. The lighting optical system according to any one of claims 1 to 5, wherein the second light source includes a semiconductor light-emitting element.

7. The lighting optical system according to any one of claims 1 to 6, wherein the first color light is red light or green light, the second color light is the remaining red light or green light, and the third color light is blue light.

8. A projection display device comprising:
the lighting optical system according to any one of claims 1 to 7;
an optical modulation device that modulates light that is output from the lighting optical system according to an image signal; and
a projection optical system that projects the light modulated by the optical modulation device.
